# EUROPEAN PATENT SPECIFICATION

(11) **EP 3 248 839 B1**
(45) Date of publication and mention of the grant of the patent: **27.02.2019**
(21) Application number: 17171870.3
(22) Date of filing: 19.05.2017
(51) Int. Cl.: B60Q 1/26, B60Q 1/30, B60Q 1/00, B60R 25/34, B60R 25/30, B60R 25/31, B60K 28/02, B60K 28/04, B60K 28/12, B60Q 3/217, B60R 21/04, B60R 25/10, B60K 35/00, B60K 28/06, B60R 1/12

(54) **VEHICULAR DISPLAY DEVICE**
FAHRZEUGANZEIGEVORRICHTUNG
AFFICHEUR POUR VÉHICULE

(30) Priority: 24.05.2016 JP 2016103543
(43) Date of publication of application: 29.11.2017
(73) Proprietor: Kabushiki Kaisha Tokai Rika Denki Seisakusho, Ohguchi-cho Niwa-gun Aichi 480-0195 (JP)
(72) Inventor: KANEMATSU, Keishi, Niwa-gun, Aichi 480-0134 (JP)
(74) Representative: TBK

(56) References cited:
- EP-A1- 1 672 333
- WO-A1-2014/204794
- US-A1- 2010 191 393
- US-A1- 2014 285 666
- US-A1- 2015 165 975
- US-B1- 6 276 821
- US-B2- 8 248 219

## Description

### BACKGROUND

### Field of the Invention

The present invention relates to a vehicular display device that displays various kinds of information or a photographic image of a vehicle periphery, and so on.

### Related Art

A vehicular display device that displays various kinds of information, is known. For example, in Japanese Patent Application Laid-Open Publication No. 2005-178657, there has been proposed a monitor-for-when-getting-into-and-getting-out-of-a-vehicle that has a display monitor disposed on a door trim upper surface capable of being seen from an outside of a vehicle in a door of the vehicle, and that reports the information to an occupant when the occupant gets into the vehicle or after the occupant gets out of the vehicle.

Moreover, in recent years, technology that displays, in a display section such as a monitor, a photographic image of a vehicle periphery, has been proposed instead of an optical mirror.

However, in Japanese Patent Application Laid-Open Publication No. 2005-178657, in order to report the information by display when the occupant gets into the vehicle or gets out of the vehicle, it is required to provide the upper surface of the door trim with a dedicated display section, and there is room for improvement.

Document US 2014/0285666 A1 discloses a vision system for a vehicle including an exterior rearview mirror assembly mounted at an exterior portion of a door of a vehicle, and a video display screen operable to display video images captured by the imaging sensor disposed at an interior portion of the vehicle door.

Document US 6,276,821 B1 discloses an exterior mirror assembly security light module that switches lighting upon predetermined conditions.

Document US 2015/0165975 A1 discloses peripheral displays that can be seen by a driver sitting on a driver seat inside a vehicle.

Further, document WO 2014/204794 A1 discloses a vehicle vision system, document EP 1 672 333 A1 discloses an anomaly judgement system, document US 2010/0191393 A1 discloses a smart key system, and document US 8,248,219 B2 discloses an interior information display apparatus.

### SUMMARY

The present invention was made in view of the above-described facts, and provides a vehicular display device capable of displaying information to an occupant on a vehicle outside, without providing a dedicated display section.

In order to achieve the above-described object, a first aspect of the present invention includes: a pair of display sections that are provided on each of left and right inside a vehicle interior and are disposed configured to be visually recognized from a vehicle outside on an opposite side to a side on which each of the pair of display sections has been provided, the pair of display sections each displaying a photographic image of a vehicle periphery; and a control section that controls the display section so as to display predetermined information when display conditions have been satisfied, the display conditions being satisfied in at least one of a case that a person is about to get into a vehicle, a case that a person is about to move away from the vehicle, and a case that approach to the vehicle by a person has been detected.

Due to the first aspect of the present invention, a pair of display sections are provided on each of left and right inside a vehicle interior and are disposed configured to be visually recognized from a vehicle outside on an opposite side to a side on which each of the pair of display sections has been provided. Moreover, a photographic image of a vehicle periphery is displayed in the display section. That is, by confirming the photographic image of the display section, the vehicle periphery can be visually recognized.

Moreover, in a control section, the display section is controlled so as to display predetermined information when display conditions have been satisfied, the display conditions being satisfied in at least one of a case that a person is about to get into a vehicle, a case that a person is about to move away from the vehicle, and a case that approach to the vehicle by a person has been detected. The display section is disposed configured to be visually recognized from the vehicle outside, hence when the display conditions have been satisfied, the predetermined information can be displayed to an occupant on the vehicle outside. Therefore, information can be displayed to the occupant on the vehicle outside, without providing a dedicated display section.

Note that as in a second aspect of the present invention, the display conditions may be satisfied when there has been acquired getting-into/getting-out-of information showing at least one of getting-into the vehicle and getting-out-of the vehicle by the occupant, and the control section may control the display section so as to display the predetermined information in the display section on an opposite side to a getting-into/getting-out-of side shown by the getting-into/getting-out-of information. That is, the predetermined information is displayed when there has been acquired getting-into/getting-out-of information corresponding to at least one of the case that a person is about to get into a vehicle, the case that a person is about to move away from the vehicle, and the case that approach to the vehicle by a person has been detected. This makes it possible for the predetermined information, such as a message, to be displayed and confirmed from the vehicle outside when the occupant gets into or gets out of the vehicle. Moreover, since display is performed in the display section on an opposite side to where the occupant gets into or gets out of the vehicle, power consumption can be reduced more than when display is performed in both of the pair of display sections.

Moreover, as in a third aspect of the present invention, the display conditions may be satisfied when an ignition switch has been turned from on to off, an accessory switch has been turned from on to off, and a door has been opened from a closed state, and the control section may control the display section so as to display the predetermined information in the display section on an opposite side to a side of opening of the door. That is, by judging getting-out-of the vehicle by the occupant (the case of a person being about to move away from the vehicle) based on the ignition switch, the accessory switch, and information of the door being open/closed, and then displaying this, it becomes possible for the predetermined information, such as a message, to be confirmed from the vehicle outside when the occupant gets out of the vehicle. Moreover, since display is performed in the display section on an opposite side to opening of the door, power consumption can be reduced more than when display is performed in both of the pair of display sections.

Moreover, as in a fourth aspect of the present invention, the display conditions may be satisfied when there has been detected an own vehicle key carried by an occupant on the vehicle outside, and the control section may control the display section so as to display the predetermined information in the display section on an opposite side to the occupant on the vehicle outside. This makes it possible for the predetermined information, such as a message, to be displayed in the display section when approach to the vehicle by a person has been detected. Moreover, since display is performed in the display section on an opposite side to the occupant on the vehicle outside, power consumption can be reduced more than when display is performed in both of the pair of display sections.

Moreover, as in a fifth aspect of the present invention, the display conditions may be satisfied when there has been performed at least one of a door locking operation showing a key having been shut in to the vehicle interior and a door locking operation in a state of it having been forgotten to close a window, and the control section may control the display section so as to display warning information corresponding to the one of the operations, as the predetermined information, in the display section on an opposite side to a door where the operation has been performed. This makes it possible to warn the occupant on the vehicle outside when a person is about to move away from the vehicle in a state of the key having been shut in or it having been forgotten to close a window. Moreover, since display is performed in the display section on an opposite side to the door where the operation has been performed, power consumption can be reduced more than when display is performed in both of the pair of display sections.

Moreover, as in a sixth aspect of the present invention, there may be further included a generating section that generates at least one of a sound and light, and the control section, when displaying the predetermined information, may further control the generating section. This makes possible a report to the occupant of various kinds of information by at least one of light and sound, in addition to display by the display section.

The above-described kinds of inventions have an effect of being able to provide a vehicular display device capable of displaying information to an occupant on a vehicle outside, without providing a dedicated display section.

### BRIEF DESCRIPTION OF THE DRAWINGS

Exemplary embodiments will be described in detail with reference to the following figures, wherein:
Fig. 1A is a view showing an example of a vehicle mounting position of a vehicular visual recognition device according to the present embodiment;
Fig. 1B is a view showing a schematic configuration of the vehicular visual recognition device according to the present embodiment;
Fig. 2 is a view for explaining an arrangement of monitors of the vehicular visual recognition device according to the present embodiment;
Fig. 3 is a block diagram showing a configuration of a control system of the vehicular visual recognition device according to the present embodiment;
Fig. 4 is a flowchart showing an example of display control performed by a control device of the vehicular visual recognition device according to the present embodiment; and
Fig. 5 is a flowchart showing an example of a warning process.

### DETAILED DESCRIPTION

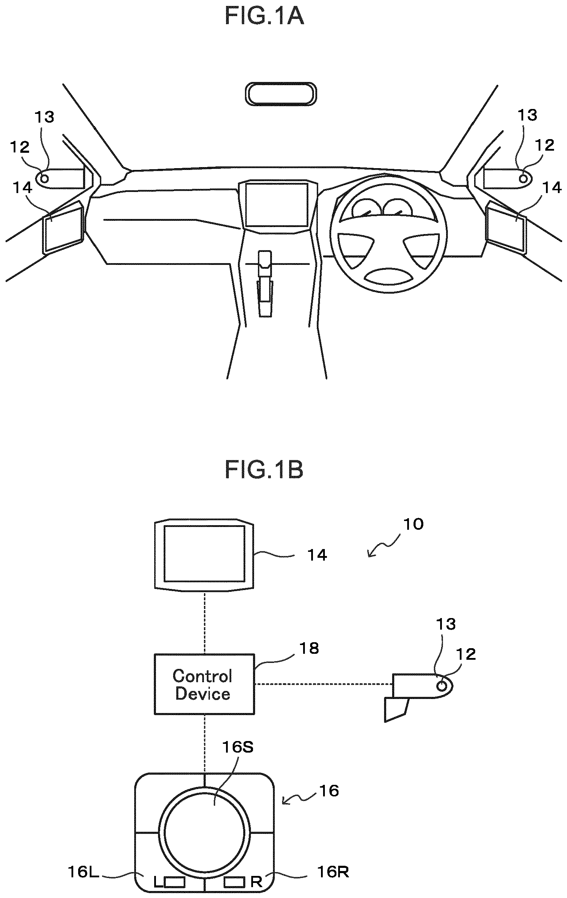

An example of an embodiment of the present invention will be described in detail below with reference to the drawings. In the present embodiment, a vehicular visual recognition device will be described as an example of a vehicular display device. Fig. 1A is a view showing an example of a vehicle mounting position of the vehicular visual recognition device according to the present embodiment, and Fig. 1B is a view showing a schematic configuration of the vehicular visual recognition device according to the present embodiment.

A vehicular visual recognition device 10 according to the present embodiment includes: a rear side camera 12; a monitor 14 acting as a display section and a generating section; an operating section 16; and a control device 18 acting as a control section. The rear side camera 12, the monitor 14, and the control device 18 are respectively provided corresponding to left and right of a vehicle.

The rear side camera 12 is mounted on an outer side at a vehicle front side end of a middle section in an up-down direction of a side door (front side door, not shown in the drawings) of the vehicle, and photographs a vehicle rear side. The rear side camera 12 is provided in a substantially rectangular parallelepiped shaped box-like casing 13 acting as a supporting body, has a lens disposed directed to the vehicle rear side, and photographs a rear side of the vehicle. An inner end section in a vehicle width direction of the casing 13 is attached to the side door, and the casing 13 is supported rotatably in a vehicle front-rear direction in the side door (vehicle body side). Note that the casing 13 may adopt a form of being attached to another position such as a front fender, not the side door.

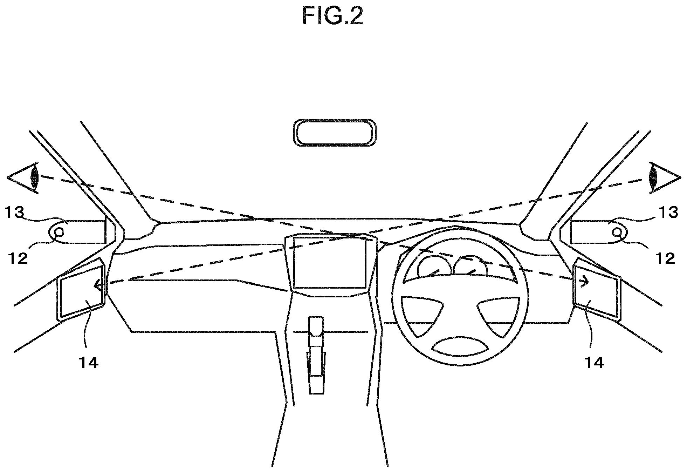

The monitor 14 is provided in a left and right door trim, and mainly displays a photographic image of the rear side camera 12 as a visual recognition image. In detail, the monitor 14 is provided having its display surface offset to a driving seat side with respect to a vehicle inside direction so as to be visually recognizable by an occupant of a driving seat, and as shown by the dotted lines of Fig. 2, is provided in a position visually recognizable from a vehicle outside on an opposite side of the monitor 14. In the present embodiment, the monitor 14 is configured as a substitute of an outer mirror, and by confirming the monitor 14, the vehicle rear side representing a vehicle periphery can be visually recognized. The monitor 14 is respectively provided corresponding to left and right of the vehicle. Note that in the present embodiment, an example where the monitor 14 is provided in the door trim in a vehicle interior is described, but an arrangement position is not limited to this. For example, the monitor 14 may be provided close to a lower end of a front pillar. Moreover, it is configured possible for the monitor 14 to be provided with a speaker and to be provided with a lamp such as an LED lamp, and for various kinds of reports or warnings, and so on, by sound or light, to be performed.

The operating section 16 performs the likes of instruction of change of a display position of the image displayed in the monitor 14, that is, a rear side visual recognition range. The operating section 16 includes, for example, the likes of a switch or sensor for performing the likes of instruction of change to the vehicle width direction or instruction of change to the vehicle up-down direction of the visual recognition range, and a switch for instructing a target monitor 14 (left or right) whose visual recognition range is to be changed. Specifically, the operating section 16 includes: a left switch 16L and right switch 16R for instructing a direction corresponding to the monitor 14 whose visual recognition range is to be changed; and a direction instructing section 16S for instructing a direction of change.

The control device 18 is provided corresponding to each of left and right of the vehicle, and performs display control of the photographic image of each of the left and right rear side cameras 12. Note that the control device 18 may be configured so as to further perform the likes of reversing interlock control where a vehicle rear side visual recognition range is changed during reversing to make it easier to visually recognize an obstacle on a lower side vehicle side, or turning interlock control where the visual recognition range is changed by interlocking with operation of a direction instructing apparatus to make it easier to visually recognize the vehicle rear side.

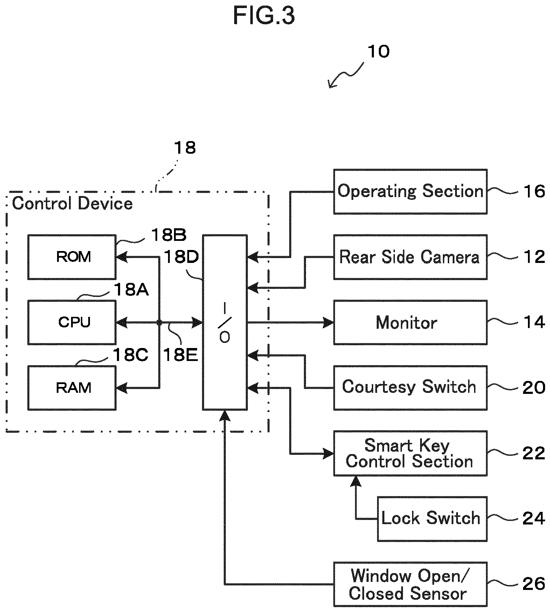

Next, a configuration of a control system of the vehicular visual recognition device 10 according to the present embodiment will be described. Fig. 3 is a block diagram showing the configuration of the control system of the vehicular visual recognition device 10 according to the present embodiment.

The control device 18 is configured by a microcomputer in which a CPU 18A, a ROM 18B, a RAM 18C, and an I/O (input/output interface) 18D are each connected to a bus 18E.

The ROM 18B stores various kinds of programs such as a visual recognition image control program for displaying in the monitor 14 the rear side photographic image of the rear side camera 12, or a display control program that displays information required at a getting-into/getting-out-of time of at least one of getting into the vehicle and getting out of the vehicle. The program stored in the ROM 18B is run in the RAM 18C to be executed by the CPU 18A, whereby photographic control of the rear side camera 12 and display control to the monitor 14 are performed.

The operating section 16 for instructing the likes of change in visual recognition range, the rear side camera 12, and the monitor 14 are connected to the I/O 18D.

When the likes of an instruction of change of the rear side visual recognition range is performed by the occupant, the operating section 16 outputs a change instruction signal to the control device 18. Specifically, the operating section 16 includes the above-mentioned left switch 16L, right switch 16R, and direction instructing section 16S shown in Fig. 1B. That is, the direction (left or right) corresponding to the monitor 14 whose visual recognition range is to be changed is instructed by the left switch 16L or right switch 16R, and the change direction (vehicle width direction and vehicle up-down direction) of the visual recognition range is instructed by the direction instructing section 16S.

The rear side camera 12 obtains the rear side photographic image by photographing the vehicle rear side. The rear side photographic image obtained by photographing is outputted to the control device 18 as a photographic result of the rear side camera 12.

The monitor 14 displays the rear side photographic image photographed by the rear side camera 12, based on control of the control device 18. Moreover, the monitor 14 displays the information required at the getting-into/getting-out-of time of at least one of getting into the vehicle and getting out of the vehicle by the occupant, based on control of the control device 18.

In the present embodiment, a courtesy switch 20, a smart key control section 22, a window open/closed sensor 26, and a lock switch 24 are further connected to the I/O 18D.

The courtesy switch 20 is a switch that is on/off according to opening/closing of the door, and by a signal of the switch being inputted to the control device 18, the control device 18 detects opening/closing of the door.

The smart key control section 22 detects a smart key carried by the occupant and controls locking and release of a door lock. The lock switch 24 provided in an outside handle is connected to the smart key control section 22. Locking and release of the door lock is made possible by operation of the lock switch 24. In the present embodiment, a detection result of the smart key or an operation result of the lock switch 24 are inputted to the control device 18, and the control device 18 can detect door locking operations such as the smart key having been shut in or it having been forgotten to close a window.

The window open/closed sensor 26 detects opening/closing of a side window of the vehicle, and has its detection result inputted to the control device 18. The control device 18 can detect the likes of it having been forgotten to close a window, from a detection result of the window open/closed sensor 26.

Then, the control device 18 controls photography by the rear side camera 12 and, based on the photographic result of the rear side camera 12, performs control of display to the monitor 14. Moreover, when a change in the rear side visual recognition range has been instructed by the operating section 16, the control device 18 performs control changing a display position (rear side visual recognition range) of the monitor 14. The change in display position of the monitor 14 changes the visual recognition range by, for example, displaying in the monitor 14 a partial image having part of the photographic extracted and changing a range of extracting. Alternatively, the visual recognition range may be changed by displaying the entire photographic image in the monitor 14 and changing a photographing direction of the rear side camera 12. Furthermore, the control device 18 controls such that predetermined information is displayed in the monitor 14 in at least one of a case that a person is about to get into the vehicle, a case that a person is about to move away from the vehicle, and a case that approach to the vehicle by a person has been detected. In detail, the control device 18 controls such that there is displayed in the monitor 14 information required at a getting-into/getting-out-of time of at least one of getting into the vehicle and getting out of the vehicle, based on signals from the courtesy switch 20, the smart key control section 22, and the window open/closed sensor 26. For example, when there has been acquired getting-into/getting-out-of information showing the occupant getting into or getting out of the vehicle, the predetermined information is displayed in the monitor 14 on an opposite side to where the occupant is getting into or getting out of the vehicle. More specifically, a predetermined greeting message, or the like, is displayed in the monitor 14 at a time of getting into the vehicle. Alternatively, when getting out of the vehicle, the likes of a predetermined greeting message or a warning message such as it having been forgotten to close a window or the key having been shut in, is displayed in the monitor 14. Alternatively, a predetermined greeting message, or the like, is displayed in the monitor 14 when approach of the occupant to the vehicle has been detected.

Note that display control of the left and right monitors 14 may be performed by one control device 18, or a pair of the control devices 18 may be provided corresponding to left and right of the vehicle. In the case that a pair of the control devices 18 are provided corresponding to left and right, each may have the other control device 18 connected to its I/O 18D so that they can mutually communicate.

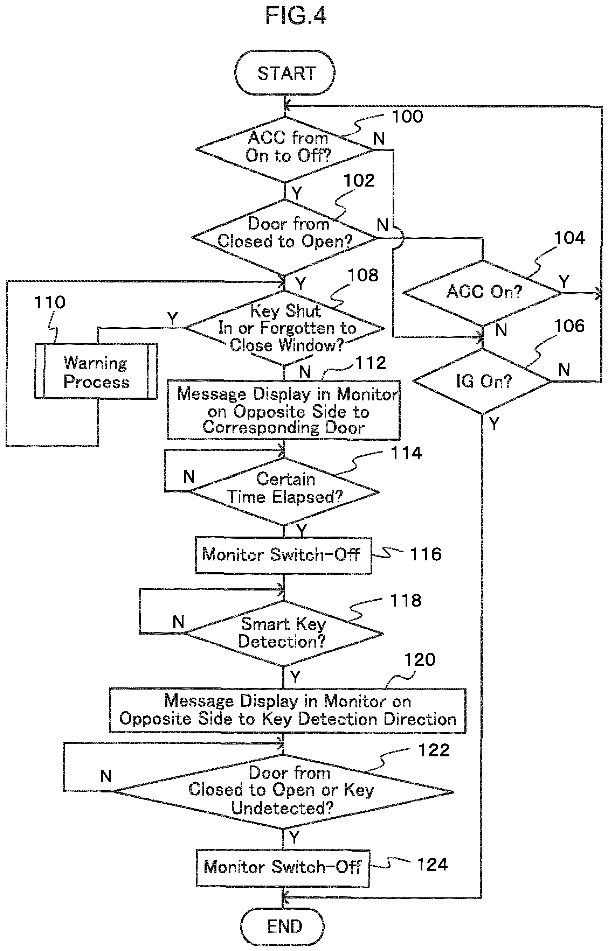

Here, display control for displaying in the monitor 14 of the information required at a getting-into/getting-out-of time of at least one of the occupant getting into the vehicle and the occupant getting out of the vehicle performed by the control device 18 of the vehicular visual recognition device 10 according to the present embodiment, will be described. Fig. 4 is a flowchart showing an example of display control performed by the control device 18 of the vehicular visual recognition device 10 according to the present embodiment. Note that a process of Fig. 4 begins when an unillustrated ignition switch (IG) has been operated from on to off.

In step 100, the control device 18 determines whether an accessory switch (ACC) has been operated from on to off, or not. When said determination is affirmative, the control device 18 shifts to step 102, and when said determination is negative, the control device 18 shifts to step 106.

In step 102, the control device 18, based on a signal from the courtesy switch 20, determines whether the door has been opened from a closed state, or not. When said determination is negative, the control device 18 shifts to step 104, and when said determination is affirmative, the control device 18 shifts to step 108.

In step 104, the control device 18 determines whether the ACC has been turned on, or not. When said determination is affirmative, the control device 18 returns to step 100 to repeat the above-mentioned process, and when said determination is negative, the control device 18 shifts to step 106.

In step 106, the control device 18 determines whether the ignition switch (IG) has been turned on, or not. When said determination is affirmative, the control device 18 finishes said process to perform another process, and when said determination is negative, the control device 18 returns to step 100 to repeat the above-mentioned process.

On the other hand, in step 108, the control device 18, based on information from the smart key control section 22, determines whether the key has been shut in or it has been forgotten to close a window, or not. When said determination is affirmative, the control device 18 shifts to step 110, and when said determination is negative, the control device 18 shifts to step 112. Note that the smart key control section 22 determines that the key has been shut in when the lock switch 24 provided in the outside handle has been operated in a state where the smart key has been detected inside the vehicle. On the other hand, when the lock switch 24 has been operated in a state where a window has been detected in an open state by the window open/closed sensor 26, it is determined that it has been forgotten to close a window.

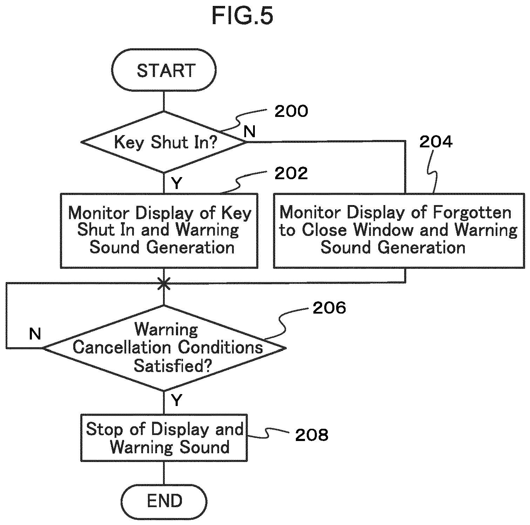

In step 110, the control device 18 performs a warning process and returns to step 108 to repeat the above-mentioned process. The warning process is performed according to a flow of a process shown in Fig. 5. Fig. 5 is a flowchart showing an example of the warning process.

That is, in step 200 after the control device 18 has shifted to the warning process, the control device 18 determines whether in step 108, the determination of step 108 was affirmative by the key having been shut in, or the determination of step 108 was affirmative by it having been forgotten to close a window. If said determination is affirmative in the case of the key having been shut in, the control device 18 shifts to step 202, and if said determination is negative in the case of it having been forgotten to close a window, the control device 18 shifts to step 204.

In step 202, the control device 18 controls such that the key having been shut in is displayed in the monitor 14 and a warning sound is generated, then shifts to step 206. In detail, a message such as "The key is inside the vehicle." is displayed as warning information and the warning sound is generated, in the monitor 14 on an opposite side to a door where a key-having-been-shut-in operation has been performed. The occupant can confirm the message displayed in the display-controlled monitor 14, via a window, from an opposite side to the display-controlled monitor 14. Moreover, since the message is displayed in one of the monitors 14, power consumption can be reduced more than when the message is displayed in both of the left and right monitors 14. Note that it may be controlled such that a lamp, or the like, provided in the likes of the monitor 14 is simultaneously lighted.

In step 204, the control device 18 controls such that it having been forgotten to close a window is displayed in the monitor 14 and a warning sound is generated, then shifts to step 206. In detail, a message such as "A window is open." is displayed as warning information and the warning sound is generated, in the monitor 14 on an opposite side to a door where a door locking operation has been performed in a state of it having been forgotten to close a window. The occupant can confirm the message displayed in the display-controlled monitor 14, via a window, from an opposite side to the display-controlled monitor 14. Moreover, since the message is displayed in one of the monitors 14, power consumption can be reduced more than when the message is displayed in both of the left and right monitors 14. Note that it may be controlled such that a lamp, or the like, provided in the likes of the monitor 14 is simultaneously lighted.

In step 206, the control device 18 determines whether warning cancellation conditions have been satisfied, or not. In the case of the key having been shut in, said determination determines the likes of whether the key inside the vehicle has been taken out or not, by acquiring information from the smart key control section 22. On the other hand, in the case of it having been forgotten to close a window, said determination determines the likes of whether closing of the window has been detected by the window open/closed sensor 26 or not. Then, the control device 18 waits until said determination is affirmative, then shifts to step 208.

In step 208, the control device 18 ends a series of warning processes by stopping a warning display and the warning sound, and returns to the above-mentioned step 108 to repeat the above-mentioned process.

Meanwhile, returning to the process of Fig. 4, in step 112, the control device 18 controls such that a message is displayed in the monitor 14 on an opposite side to a direction that the door has been opened, then shifts to step 114. That is, when the occupant is getting out of the vehicle and is about to move away from the vehicle, a message is displayed in the monitor 14. For example, a message such as "Have a nice day." is displayed in the monitor 14. The occupant can confirm the message displayed in the display-controlled monitor 14, via a window, from an opposite side to the display-controlled monitor 14. Moreover, since the message is displayed in one of the monitors 14, power consumption can be reduced more than when the message is displayed in both of the left and right monitors 14. Note that it may be controlled such that when the message is displayed in the monitor 14, at least one of a sound (a beep sound, a vocal sound, or the like) and light is further generated.

In step 114, the control device 18 waits until a certain time elapses from the message being displayed in the monitor 14, then shifts to step 116.

In step 116, the control device 18 switches off display of the monitor 14, then shifts to step 118. That is, the message is switched off after the message has been displayed for a certain time in the monitor 14.

In step 118, the control device 18 determines whether an own vehicle smart key has been detected by the smart key control section 22, or not. The control device 18 waits until said determination is affirmative, then shifts to step 120. That is, the control device 18 determines whether the occupant is re-approaching the vehicle after having got out of the vehicle, or not.

In step 120, the control device 18 controls such that a message is displayed in the monitor 14 positioned in an opposite direction to a direction that the smart key control section 22 has detected the smart key, then shifts to step 122. That is, in at least one of a case that the occupant is about to get into the vehicle or a case that approach to the vehicle by the occupant has been detected, a message is displayed in the monitor 14. For example, a greeting message such as "Good morning", "Good afternoon", "Good evening", and so on, is displayed. The occupant can confirm the message displayed in the display-controlled monitor 14, via a window, from an opposite side to the display-controlled monitor 14. Moreover, since the message is displayed in one of the monitors 14, power consumption can be reduced more than when the message is displayed in both of the left and right monitors 14. Note that it may be controlled such that when the message is displayed in the monitor 14, at least one of a sound (a beep sound, a vocal sound, or the like) and light is further generated. Moreover, in the present embodiment, when approach of the occupant carrying the smart key has been detected, a message is displayed in the monitor 14 as described above, but the present invention is not limited to this. For example, there may be included a sensor that detects approach of a person, and it may be controlled such that when approach to the vehicle by the person has been detected, a security message such as "On alert" is displayed in the monitor 14 on an opposite side to a side of approach by the person.

In step 122, the control device 18 determines whether a door has been opened from a closed state, based on a signal of the courtesy switch 20, or the own vehicle smart key has gone undetected by the smart key control section 22, or not. The control device 18 waits until said determination is affirmative, then shifts to step 124.

In step 124, the control device 18 controls such that display of the monitor 14 is switched off, thereby ending a series of processes.

Note that in the above-described embodiment, a vehicular visual recognition device that visually recognizes a vehicle rear side as a vehicle periphery, by photographing the vehicle rear side, has been described as an example. However, the present invention is not limited to this. For example, a vehicular visual recognition device that photographs and displays another direction such as a vehicle side or front, rear, and so on, may be applied. Moreover, although a vehicular visual recognition device has been described as an example of the vehicular display device, the present invention is not limited to this, and a vehicular display device that displays various kinds of information of the vehicle, and so on, may be applied.

Moreover, the process performed by the control device 18 in the above-described embodiment has been described as a software process. However, the present invention is not limited to this. For example, there may be adopted a process performed by hardware, or there may be adopted a process combining both hardware and software.

Moreover, it may be configured that the process performed by the control device 18 in the above-described embodiment and modified examples is distributed stored as a program in a storage medium.

When an ignition switch has been turned off, an accessory switch has been turned off, and a door has been opened (100, 102), a message is displayed in a monitor on an opposite side to a side that the door has been opened (112). In addition, when it has been detected that a key has been shut in or that it has been forgotten to close a window (104), there is performed a warning display that displays a warning in a monitor on an opposite side to a door where a door locking operation has been performed (110). Moreover, when there has been detected a smart key carried by an occupant on a vehicle outside after getting out of a vehicle (118), a message is displayed in a monitor on an opposite side to a key detection direction (120).

## Claims

1. A vehicular display device (10), **characterized by**:
a pair of display sections (14) that are provided on each of left and right inside a vehicle interior and are disposed configured to be visually recognized from a vehicle outside on an opposite side to a side on which each of the pair of display sections (14) has been provided, the pair of display sections (14) each displaying a photographic image of a vehicle periphery; and
a control section (18) that controls the display sections (14) so as to display predetermined information when display conditions have been satisfied, the display conditions being satisfied in at least one of a case that a person is about to get into a vehicle, a case that a person is about to move away from the vehicle, and a case that approach to the vehicle by a person has been detected.

2. The vehicular display device (10) according to claim 1, wherein
the display conditions are satisfied when there has been acquired getting-into/getting-out-of information showing at least one of getting-into the vehicle and getting-out-of the vehicle by an occupant, and the control section (18) controls the display sections (14) so as to display the predetermined information in the display section (14) on an opposite side to a getting-into/getting-out-of side shown by the getting-into/getting-out-of information.

3. The vehicular display device (10) according to claim 1, wherein
the display conditions are satisfied when an ignition switch has been turned from on to off, an accessory switch has been turned from on to off, and a door has been opened from a closed state, and the control section (18) controls the display sections (14) so as to display the predetermined information in the display section (14) on an opposite side to a side of opening of the door.

4. The vehicular display device (10) according to any of claims 1 to 3, wherein
the display conditions are satisfied when there has been detected an own vehicle key carried by an occupant on the vehicle outside, and the control section (18) controls the display sections (14) so as to display the predetermined information in the display section (14) on an opposite side to the occupant on the vehicle outside.

5. The vehicular display device (10) according to any of claims 1 to 4, wherein
the display conditions are satisfied when there has been performed at least one of a door locking operation showing a key having been shut in to the vehicle interior and a door locking operation in a state of it having been forgotten to close a window, and the control section (18) controls the display sections (14) so as to display warning information corresponding to the one of the operations, as the predetermined information, in the display section (14) on an opposite side to a door where the operation has been performed.

6. The vehicular display device (10) according to any of claims 1 to 5, further comprising a generating section that generates at least one of a sound and light,
wherein the control section (18), when displaying the predetermined information, further controls the generating section.

## Patentansprüche

1. Fahrzeuganzeigeeinrichtung (10), **gekennzeichnet durch**:
ein Paar von Anzeigeabschnitten (14), die jeweils auf einer linken und rechten Seite im Inneren eines Fahrzeuginneren bereitgesellt sind und derart angeordnet sind, dass diese dazu konfiguriert sind, von einem Fahrzeugäußeren auf einer entgegengesetzten Seite zu einer Seite, auf der jedes des Paares der Anzeigeabschnitte (14) bereitgestellt wurde, visuell erkennbar ist, wobei das Paar der Anzeigeabschnitte (14) jeweils ein fotografisches Bild einer Fahrzeugperipherie anzeigt; und
einen Steuerungsabschnitt (18), der die Anzeigeabschnitte (14) steuert, um vorbestimmte Informationen anzuzeigen, wenn Anzeigebedingungen erfüllt wurden, wobei die Anzeigebedingungen in zumindest einem eines Falles, dass eine Person dabei ist, in ein Fahrzeug einzusteigen, eines Falles, wenn eine Person dabei ist, sich von dem Fahrzeug wegzubewegen, und eines Falles, dass eine Annäherung an das Fahrzeug durch eine Person erfasst wurde, erfüllt sind.

2. Fahrzeuganzeigeeinrichtung (10) gemäß Anspruch 1, wobei
die Anzeigebedingungen erfüllt sind, wenn Einsteige-/Aussteige-Informationen beschafft wurden, die zumindest ein Einsteigen in das Fahrzeug oder ein Aussteigen aus dem Fahrzeug durch einen Insassen zeigen, und der Steuerungsabschnitt (18) die Anzeigeabschnitte (14) steuert, um die vorbestimmten Informationen in dem Anzeigeabschnitt (14) auf einer entgegengesetzten Seite zu einer Einsteige-/Aussteige-Seite, die durch die Einsteige-/Aussteige-Informationen gezeigt ist, anzuzeigen.

3. Fahrzeuganzeigeeinrichtung (10) gemäß Anspruch 1, wobei
die Anzeigebedingungen erfüllt sind, wenn ein Zündschalter von An zu Aus umgeschaltet wurde, ein Zubehörschalter von An zu Aus umgeschaltet wurde, und eine Tür von einem geschlossenen Zustand geöffnet wurde, und der Steuerungsabschnitt (18) die Anzeigeabschnitte (14) steuert, um die vorbestimmten Informationen in dem Anzeigeabschnitt (14) auf einer entgegengesetzten Seite zu einer Seite des Öffnens der Tür anzeigt.

4. Fahrzeuganzeigeeinrichtung (10) gemäß einem der Ansprüche 1 bis 3, wobei
die Anzeigebedingungen erfüllt sind, wenn ein Bezugsfahrzeugschlüssel, der durch einen Insassen des Fahrzeugs außerhalb des Fahrzeugs getragen wird, erfasst wurde, und der Steuerungsabschnitt (18) die Anzeigeabschnitte (14) steuert, um die vorbestimmten Informationen in dem Anzeigeabschnitt (14) auf einer entgegengesetzten Seite zu dem Insassen auf der Fahrzeugaußenseite anzeigt.

5. Fahrzeuganzeigeeinrichtung (10) gemäß einem der Ansprüche 1 bis 4, wobei
die Anzeigebedingungen erfüllt sind, wenn zumindest eine einer Türabsperroperation, die zeigt, dass ein Schlüssel in dem Fahrzeuginneren eingeschlossen wurde, und einer Türabsperroperation in einem Zustand, in dem vergessen wurde, ein Fenster zu schließen, durchgeführt wurde, und der Steuerungsabschnitt (18) die Anzeigeabschnitte (14) steuert, um Warninformationen entsprechend der einen der Operationen als die vorbestimmten Informationen in dem Anzeigeabschnitt (14) auf einer entgegengesetzten Seite zu einer Tür, bei der die Operation durchgeführt wurde, anzeigt.

6. Fahrzeuganzeigeeinrichtung (10) gemäß einem der Ansprüche 1 bis 5, weiterhin mit einem Erzeugungsabschnitt, der zumindest eines eines Tons und eines Lichts erzeugt,
wobei der Steuerungsabschnitt (18), wenn die vorbestimmten Informationen angezeigt werden, weiterhin den Erzeugungsabschnitt steuert.

## Revendications

1. Afficheur pour véhicule (10) **caractérisé par** :
une paire de sections d'affichage (14) qui sont prévues sur la gauche et la droite à l'intérieur d'un véhicule et sont disposées en étant configurées pour être visuellement reconnues depuis un extérieur du véhicule sur un côté opposé à un côté sur lequel chaque section de la paire de sections d'affichage (14) a été prévue, chaque section de la paire de sections d'affichage (14) affichant une image photographique d'une périphérie de véhicule ; et
une section de commande (18) qui commande les sections d'affichage (14) afin d'afficher une information prédéterminée lorsque les conditions d'affichage ont été satisfaites, les conditions d'affichage étant satisfaites dans au moins un cas dans lequel une personne est sur le point de rentrer dans un véhicule, un cas dans lequel une personne est sur le point de sortir du véhicule, et un cas dans lequel l'approche du véhicule par une personne a été détectée.

2. Afficheur pour véhicule (10) selon la revendication 1, dans lequel :
les conditions d'affichage sont satisfaites lorsque l'on acquiert l'information d'entrée / de sortie représentant au moins l'une parmi l'entrée dans le véhicule et la sortie du véhicule par un occupant, et la section de commande (18) commande les sections d'affichage (14) afin d'afficher l'information prédéterminée dans la section d'affichage (14) sur un côté opposé au côté d'entrée / de sortie représenté par l'information d'entrée / de sortie.

3. Afficheur pour véhicule (10) selon la revendication 1, dans lequel :
les conditions d'affichage sont satisfaites lorsqu'un commutateur d'allumage a été pivoté de marche sur arrêt, lorsqu'un commutateur d'accessoire a été pivoté de marche sur arrêt, et lorsqu'une porte a été ouverte depuis un état fermé, et la section de commande (18) commande les sections d'affichage (14) afin d'afficher l'information prédéterminée dans la section d'affichage (14) sur un côté opposé à un côté d'ouverture de la porte.

4. Afficheur pour véhicule (10) selon l'une quelconque des revendications 1 à 3, dans lequel :
les conditions d'affichage sont satisfaites lorsque l'on a détecté une clé du véhicule portée par un occupant à l'extérieur du véhicule, et la section de commande (18) commande les sections d'affichage (14) afin d'afficher l'information prédéterminée dans la section d'affichage (14) sur un côté opposé à l'occupant à l'extérieur du véhicule.

5. Afficheur pour véhicule (10) selon l'une quelconque des revendications 1 à 4, dans lequel :
les conditions d'affichage sont satisfaites lorsque l'on a réalisé au moins l'une parmi une opération de verrouillage de porte présentant une clé ayant été enfermée à l'intérieur du véhicule et une opération de verrouillage de porte dans un cas où une fenêtre n'a pas été fermée, et la section de commande (18) commande les sections d'affichage (14) afin d'afficher l'information d'avertissement correspondant à l'une desdites opérations, en tant qu'information prédéterminée, dans la section d'affichage (14) sur un côté opposé à une porte où l'opération a été réalisée.

6. Afficheur pour véhicule (10) selon l'une quelconque des revendications 1 à 5, comprenant en outre une section de génération qui génère au moins l'un parmi un son et une lumière,
dans lequel la section de commande (18), lors de l'affichage de l'information prédéterminée, commande en outre la section de génération.
